# EUROPEAN PATENT SPECIFICATION

(11) **EP 2 664 468 B1**
(45) Date of publication and mention of the grant of the patent: **02.05.2018**
(21) Application number: 13164260.5
(22) Date of filing: 18.04.2013
(51) Int. Cl.: B60D 1/06

(54) **An apparatus for coupling a trailer to a towing vehicle**
Vorrichtung zum Ankoppeln eines Anhängers an ein Zugfahrzeug
Appareil pour le couplage d'une remorque à un véhicule de remorquage

(30) Priority: 15.05.2012 NZ 59999012
(43) Date of publication of application: 20.11.2013
(73) Proprietor: Faber, Lieuwe, 2681 Glenbrook (NZ)
(72) Inventor: Faber, Lieuwe, 2681 Glenbrook (NZ)
(74) Representative: CSY St Albans

(56) References cited:
- EP-A1- 2 159 083
- WO-A1-2012/053889
- DE-U1-202006 007 049
- US-A- 3 366 402
- US-A1- 2012 043 738

## Description

### TECHNICAL FIELD:

The present invention relates generally to an apparatus for coupling a trailer to a towing vehicle. In particular, the present invention relates to an apparatus for coupling a trailer to a tow-ball of the towing vehicle.

### BACKGROUND ART:

The process of coupling a trailer to a towing vehicle with known ball and socket type couplings, can include trial and error in maneuvering the towing vehicle to align with the trailer such that the trailer tow-ball is aligned with the receiver assembly of the trailer to facilitate manual coupling of the trailer to the towing vehicle. An example of a hitch coupling is shown in US 3,366,402 which discloses a support member which is brought in contact with a hitch ball and a pivot arm which is swung over the tow ball to fix the tow ball between the support member and the pivot arm.

It can be time consuming to reverse the towing vehicle into sufficient proximity with the trailer (particularly at night when visibility is reduced). In addition the coupling process requires physical exertion by the user to manually move the trailer receiver assembly into exact alignment with the tow-ball of the towing vehicle, lift the trailer receiving assembly above the tow-ball and then lower onto the tow-ball (for example with the help of a height adjustable draw bar and jockey wheel) to enable coupling of the trailer to the towing vehicle. Such exertion can be difficult by a user with little physical ability and would depend on a number of factors such as the angle of the underlying ground surface which would influence the relative angle of the trailer towing vehicle and the type and load of the trailer.

Many apparatus have been devised to assist this coupling process such as visual alignment markers, photoelectric sensors and alerting device or ultrasonic transducers.

Although relatively inexpensive, the disadvantage of visual alignment markers is that they do not provide any positive indication of when the trailer receiver assembly is in sufficient alignment to enable coupling, with the result that the coupling process is still not reliable.

In relation to photoelectric sensors and an alerting devices, the disadvantage of these apparatus is that they can be costly to install and do not provide for an indication of alignment except in situations where the trailer hitch is in exact alignment with the trailer receiver assembly.

In relation to ultrasonic transducers, these devices can be expensive and time consuming to install and can be subject to damage by road debris or subject to theft. Furthermore, these devices require power to function and can be difficult to use reliably via a display device rather than visually in real time via the rear view mirror.

### OBJECT OF THE INVENTION:

It is an object of the invention to provide an apparatus for coupling a trailer to a towing vehicle that addresses the problems of the prior art, such as those discussed above.

Alternatively, it is an object of the invention to at least provide the public with a useful choice.

### DISCLOSURE OF INVENTION:

According to one aspect of the present invention there is provided an apparatus for coupling a trailer to a towing vehicle, the apparatus comprising:
- a support member configured to abut a posterior portion of a tow-ball of the towing vehicle at a first abutting portion positioned at an end of the support member;
- a pivot arm configured to pivot over the tow-ball to a position where a second abutting portion positioned on an end of the pivot arm is adjacent an anterior portion of the tow-ball;
- a pivot plate connected to the support member at a first pivot and to the pivot arm at a second pivot
wherein
the pivot plate is configured to bias the first abutting portion towards the second abutting portion to securely contact the posterior portion and the anterior portion of the tow-ball respectively.

Preferably, the first abutting portion and the second abutting portion have a curved inner surface configured to provide maximum contact with an outer surface of the tow-ball.

More preferably, the first abutting portion and/or the second abutting portion comprise at least one friction pad positioned on the curved inner surface of the first abutting portion and/or the second abutting portion and configured to abut the outer surface of the tow-ball when the first abutting portion and/or the second abutting portion abut the outer surface of the tow-ball.

In this way, the at least one friction pad prevents damage to the tow-ball during use and reduces trailer sway while towing a trailer by a towing vehicle.

Preferably, the pivot plate comprises a lever configured to move the pivot plate towards the support member to bias the first abutting portion and the second abutting portion towards one another after the second abutting portion of the pivot arm is adjacent the anterior portion of the tow-ball.

More preferably, the lever comprises a handle to aid the user moving the lever.

Preferably, the support member also comprises a pair of guiding plates, each guiding plate attached proximal to the first abutting portion of the support member and configured to deflect the support member when in proximity with the tow-ball to a position where the first abutting portion abuts the tow-ball.

Preferably, the position of the first pivot may be moved by attaching the pivot arm to the support member at one of a series of apertures along a length of the support member via a fixing means.

Preferably, the apparatus for coupling a trailer to a towing vehicle also comprises a catch pivotally attached to the pivot plate and configured to attach to the support member to prevent movement of the pivot plate with respect to the support member.

More preferably, the catch comprises a tension spring configured to bias the catch to release from the support member.

Preferably, the apparatus for coupling a trailer to a towing vehicle also comprises a locking pin to secure the pivot plate to the support arm.

Preferably, the apparatus for coupling a trailer to a towing vehicle also comprises a linear actuator configured to move the apparatus to or from a position where the first abutting portion abuts the posterior portion of the tow-ball.

More preferably, the linear actuator is driven by an electric motor.

According to another aspect of the present invention there is provided a method of coupling a trailer to a trailer hitch, the method comprising the steps of:
a. positioning a support member to abut a posterior portion of the tow-ball of a towing vehicle at a first abutting portion positioned at an end of the support member;
b. moving a pivot arm to pivot over the tow-ball to a position where a second abutting portion positioned on an end of the pivot arm is adjacent an anterior portion of the tow-ball; and
c. moving a pivot plate connected to the support member at a first pivot and to the pivot arm at a second pivot to bias the first abutting portion and the second abutting portion towards one another to securely contact the posterior portion and anterior portion of the tow-ball respectively.

### BRIEF DESCRIPTION OF THE FIGURES:

The invention will now be described by way of example only and with reference to any one of the accompanying drawings in which:
- Figure 1: shows a side view of a first preferred embodiment of the invention in the form of an apparatus for coupling a trailer to a tow-ball;
- Figure 2: shows a side view of the preferred embodiment shown in Figure 1 with the pivot arm moved to a position where the second abutting portion is adjacent an anterior portion of the tow-ball;
- Figure 3: shows a side view of the preferred embodiment shown in Figure 1 with the first abutting portion and the second abutting portion biased towards one another to securely abut the posterior portion and anterior portion of the tow-ball respectively;
- Figure 4: shows a plan view of another preferred embodiment of the invention with guiding plates attached;
- Figure 5: shows a side view of a second preferred embodiment of the invention in the form of an apparatus for coupling a trailer to a tow-ball with the hammer raised;
- Figure 6: shows a front view of the preferred embodiment shown in Figure 4;
- Figure 7: shows a side view of the preferred embodiment shown in Figure 4 with the hammer lowered;
- Figure 8: shows a front view of the preferred embodiment shown in Figure 7;
- Figure 9: shows a sectional schematic side view of the preferred embodiment shown in Figure 7;
- Figure 10: shows a close up sectional view of the anterior of the preferred embodiment shown in Figure 9 coupled to a tow-ball; and
- Figure 11: shows a side view of a third preferred embodiment of the present invention in the form of an apparatus for coupling a trailer to a tow-ball.

### DETAILED DESCRIPTION OF THE INVENTION:

The present invention addresses the problems identified in the prior art above by providing:
- improved ease of use in coupling a trailer to a towing vehicle through a relatively simple two part coupling process and through a straight connection of a support member with the tow-ball which obviates the need for manual angling of the trailer with respect to the tow-ball to initiate coupling; and
- improved reliability of coupling a trailer to a towing vehicle through the use of a mechanical apparatus.

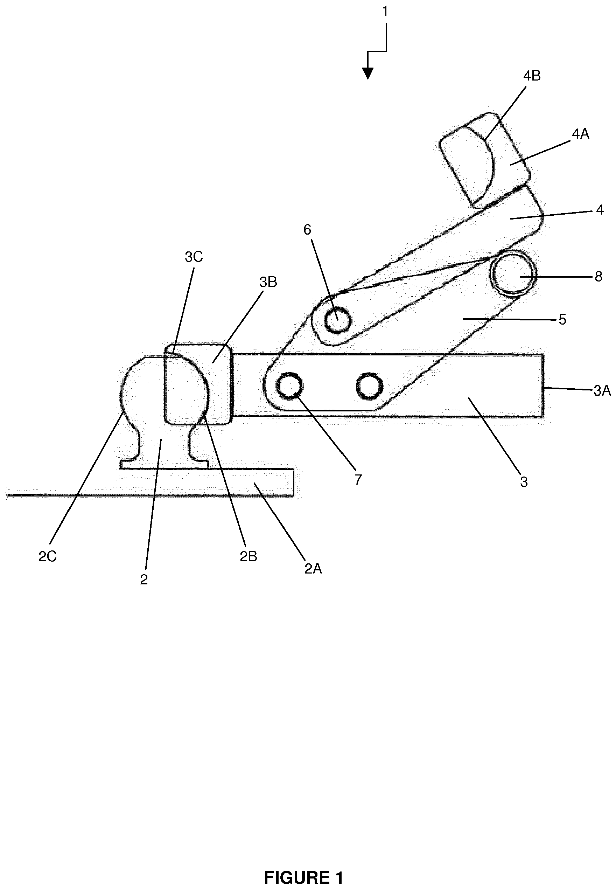

The invention is now described in relation to a first preferred embodiment of the present invention as shown in Figures 1 a to 4. It should be appreciated that the invention may be varied from the Figures without departing from the scope of the invention.

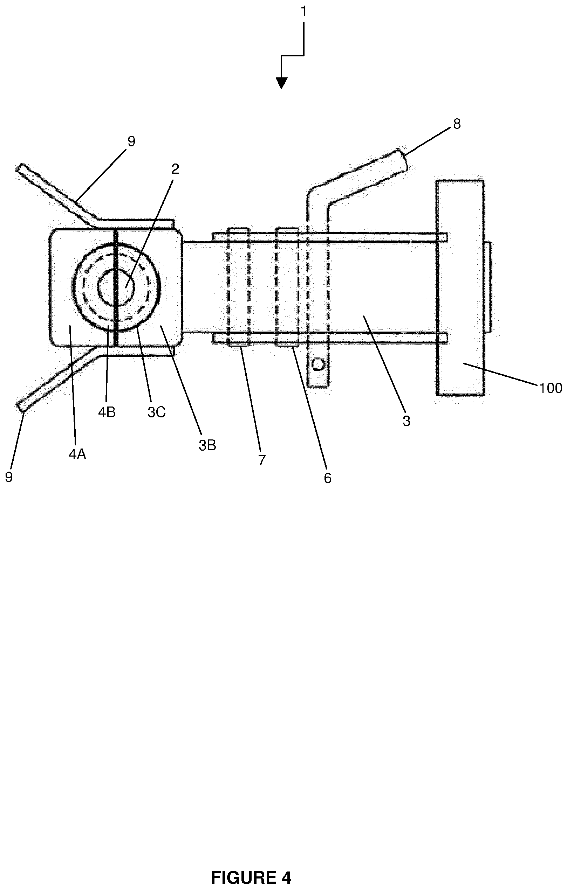

In a preferred form of the invention, a 2000kg weight capacity apparatus for coupling a trailer to a towing vehicle is generally indicated by arrow 1. A standard 50 mm tow-ball 2 is attached to a towing vehicle (not shown) via a connecting member 2A as is known in the art. The apparatus 1 comprises a support member 3 attached to the body of the trailer 100 (as shown in Figure 4) at end 3A and further comprising a first abutting portion 3B in the form of a socket with a curved surface 3C configured for abutting a posterior portion 2B of the tow-ball 2.

The apparatus 1 also comprises an pivot arm 4 attached to a pivot plate 5 at a first pivot 6. The pivot arm 4 comprises a second abutting portion 4A in the form of a socket with curved surface 4B configured for abutting an anterior portion 2C of the tow-ball 2.

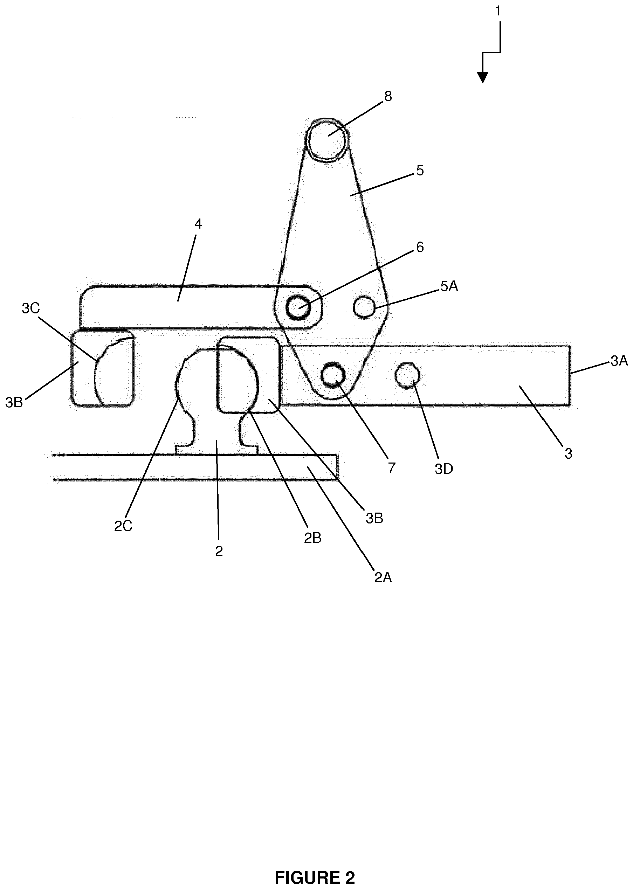

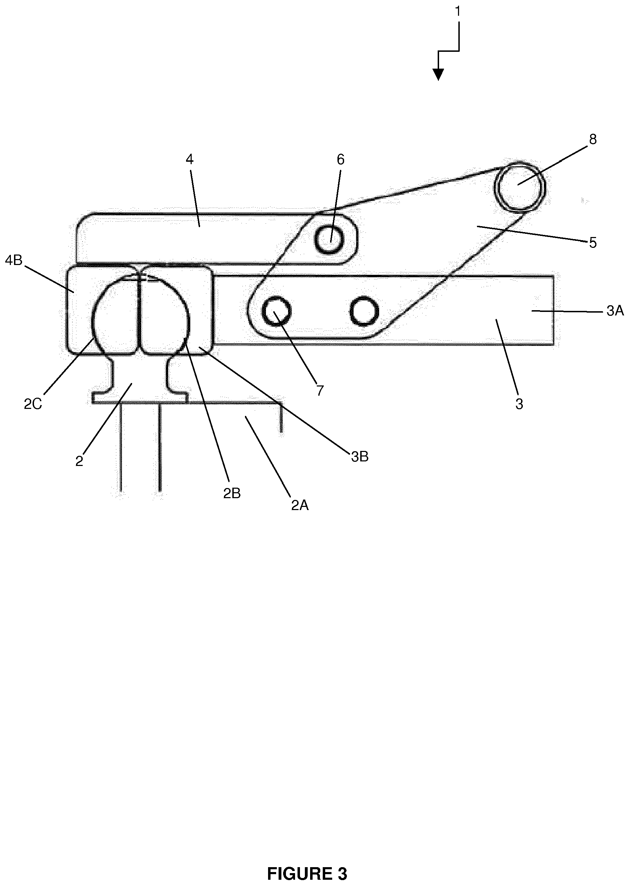

The pivot plate 5 is attached to the support member 3 at a second pivot 7. The position of the pivot plate 5 and connected pivot arm 4 can be adjusted along a length of the support member 3 at apertures 3D (as shown in Figure 2). Aperture 3D can receive a locking pin (not shown) to secure the pivot plate 5 to the support member 3 when towing a trailer or when the apparatus 1 is not in use. A handle 8 enables movement of the pivot plate 5 between an angled position with respect to the support member 3 (as shown in Figures 1 and 3) and an upright position (where the longitudinal axis of the pivot plate 5 is substantially perpendicular with the longitudinal axis of the support member 3; as shown in Figure 2).

Referring to Figure 4, a pair of guiding plates 9 are attached to the first abutting portion 3B and are angled to deflect the first abutting portion 3B when in proximity with the posterior portion 2B of the tow-ball 2 to a position where the first abutting portion 3B abuts the tow-ball 2 as the towing vehicle (not shown) is maneuvered into position with respect to the trailer 100. In this way, the first abutting portion 3B can be guided into the abutting position with respect to the tow-ball 2 when the angle of approach of the tow-ball 2 via the towing vehicle is not in exact alignment with the first abutting portion 3B of the trailer 100.

In use, the support member 3 is brought into an abutting position with respect to the posterior portion 2 of the tow-ball 2 via reversing a towing vehicle towards the trailer 100 (as shown in Figure 1). The guiding plates 9 help in achieving this position as mentioned above.

The pivot plate 5 is then moved manually by the user about pivot 7 via a lever in the form of a handle 8 to the upright position shown in Figure 2 where the longitudinal axis of the pivot plate 5 is substantially perpendicular with the longitudinal axis of the support member 3. In this position the pivot arm moves about pivot 6 over the tow-ball 2 to a position where a second abutting portion 4B is positioned adjacent the anterior portion 2B of the tow-ball 2.

The pivot plate 5 is then moved manually by the user down toward the support member 3 to an angled position with respect to the support member 3 (as shown in Figure 3) to bias the first abutting portion 3B and the second abutting portion 4B towards one another to secure the posterior portion 2B and anterior portion 2A of the tow-ball 2 respectively. In this way the trailer is securely coupled to the tow-ball 2 for towing of the trailer 100 by the towing vehicle (not shown). The apparatus 1 is now in a position to receive a locking pin through aperture 5A in the pivot plate 5 when aligned with aperture 3D in the support member 3 (as shown in Figure 3) to secure the pivot plate 3 in relation to the support member 3 to provide extra security while towing the trailer 100 by the towing vehicle (not shown).

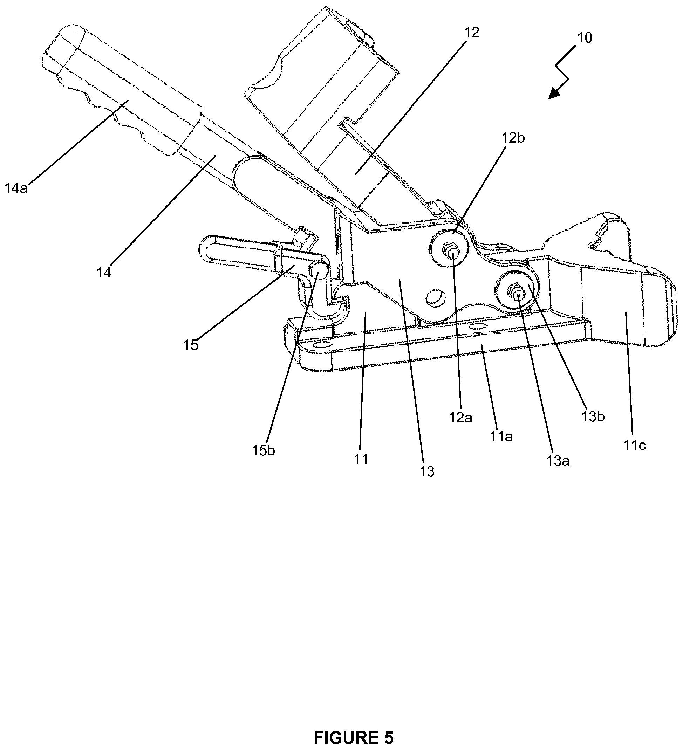

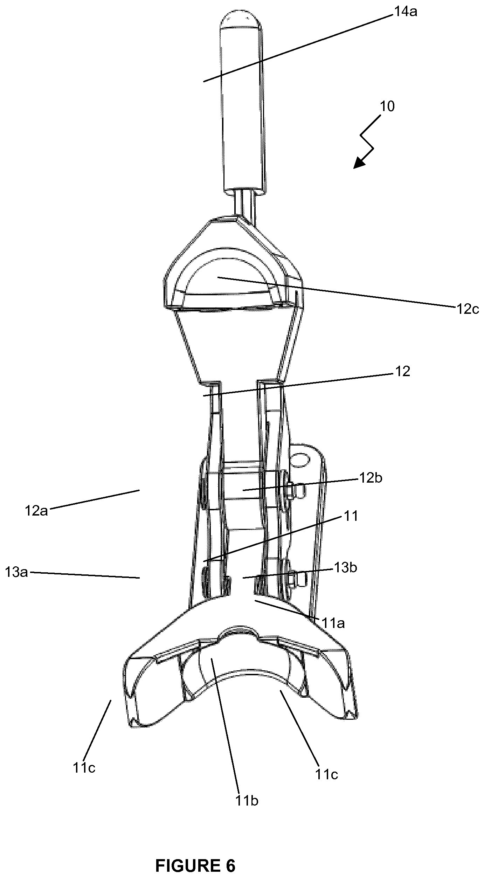

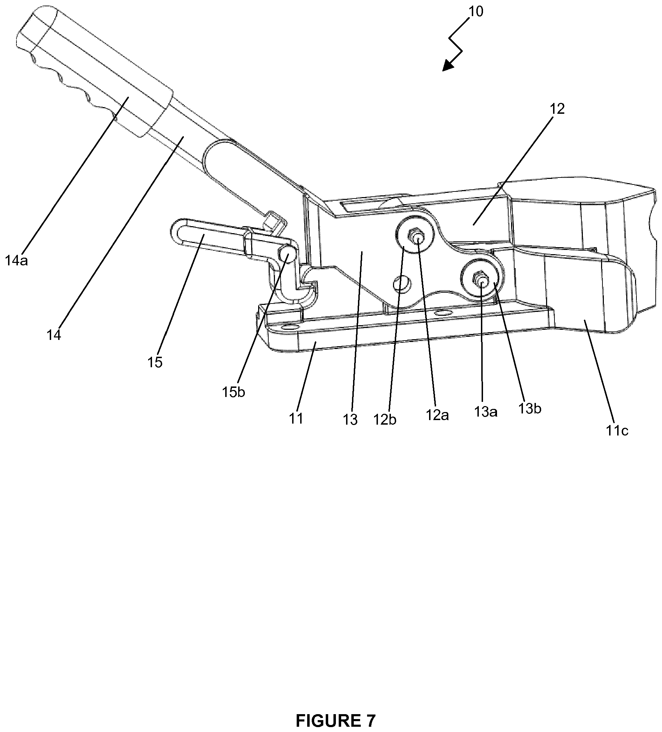

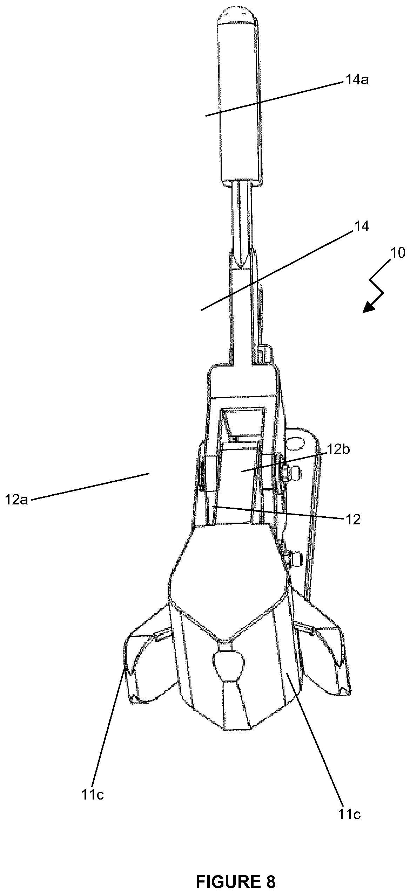

Figures 5 to 10 show a second preferred embodiment of the present invention in the form of an apparatus for coupling a trailer to a towing vehicle is generally indicated by arrow 10. Apparatus 10 has a similar arrangement of a support member 11 for attachment to a trailer (not shown) at a base 11a. A first abutting portion 11b incorporates a wide capture mouth in the form of guiding plates 11c.

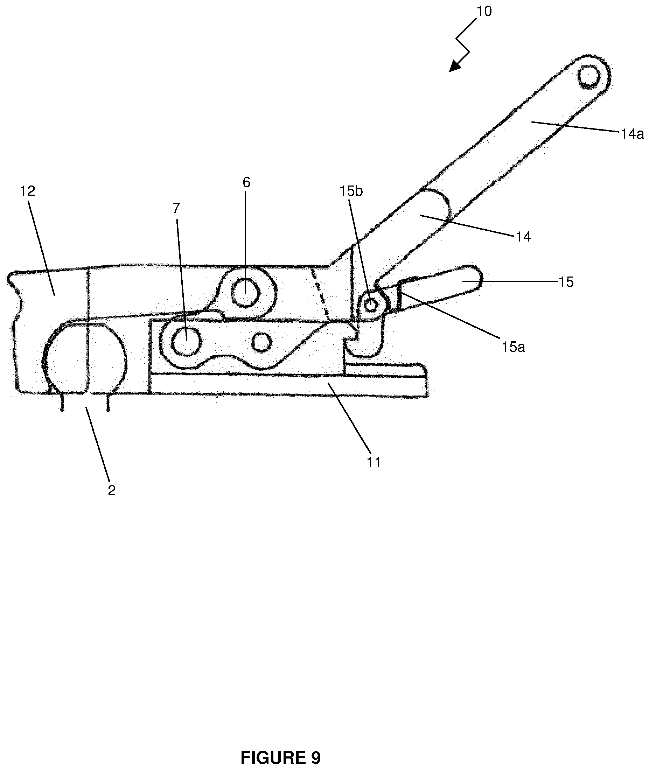

An arm 12 is pivotable on a pivot plate 13 via an M16 pin 12a and locknut 12b. The arm 12 comprises a second abutting portion 12c as described previously. The pivot plate 13 is pivotable on the support member 11 at an M16 pin 13a and locknut 13b. The pivot plate 13 is therefore connected to the arm 12 at a first pivot 12a and to the support member 11 at a second pivot 13a. The pivot plate 13 includes a handle 14 including rubber grip 14a to provide leverage for a user to move the pivot plate 13 relative to the support member 11 more easily. Overall operation of the apparatus 10 is as described previously for apparatus 1. The apparatus 10 however also comprises a catch 15 pivotally attached to the pivot plate 13 and configured to attach to the support member 11 to prevent movement of the pivot plate 13 with respect to the support member 11. The catch 15 comprises a tension spring 15a (as seen in Figure 9) configured to bias the catch to release when the handle 14 is moved relative to the support member 11. The catch 15 pivots via an M6 pin 15b and locknut 15c.

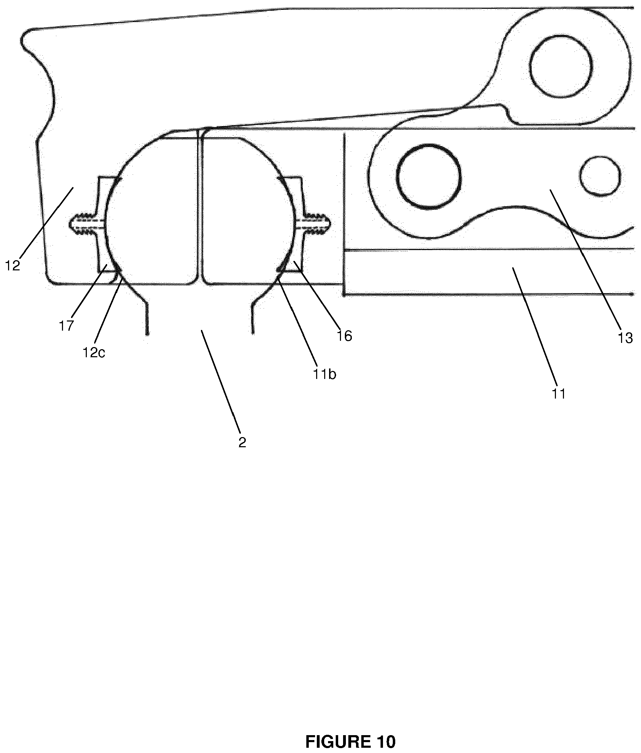

Referring to Figure 10 the first abutting portion 11b of the support member 11 and the second abutting portion 12c of the pivot arm 12 comprises a friction pad 16 and 17 respectively made of a friction material such as rubber and attached to the curved inner surfaces of the first abutting portion 11b and the second abutting portion 12c to prevent damage to the tow-ball 2 during use.

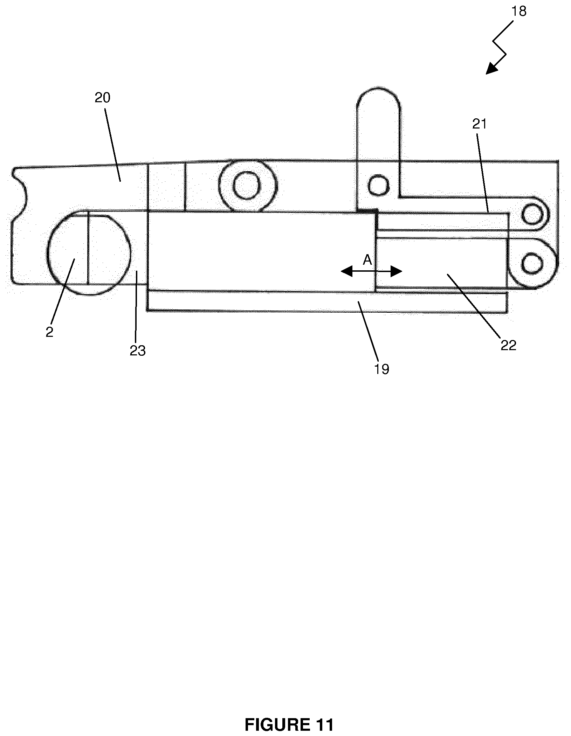

Referring to Figure 11, a third embodiment of the present invention in the form of an apparatus for coupling a trailer to a towing vehicle is generally indicated by arrow 18. A similar arrangement of support member 19, pivot arm 20 and pivot plate 21 is shown to that of apparatus 1 and 10, except that the position of the support member 19 relative to a trailer (not shown) to which apparatus 18 is attached can be varied in the direction of arrow A via a linear actuator in the form of a 12v electrically motor driven actuator 22. In this way, ease of use in positioning the first abutting portion 23 of the support member 19 is improved over manual maneuvering of the trailer to make contact between the first abutting portion 23 and the tow-ball 2.

### Example 1: Load Testing

An Avery Universal test machine IMT 233 was used to load test the preferred embodiment of the present invention shown in Figures 1 to 4 coupled to a tow ball to test for failure with the loads shown in Table 1 below:

| **Item** | **Tests and test loading in KiloNewtons** | | |
|---|---|---|---|
| | **Longitudinal tension and compression tests** | **Vertical tension and compression tests** | **Transverse thrust test** |
| **Light duty ball and coupling (2000 kg)** | **60** | **25** | **18** |

The load testing results are shown in Table 2 below:

| **Configuration** | **Test Load (kN)** | **Duration** | **Result** |
|---|---|---|---|
| Vertical Tension | 25 | 1 minute | No separation of ball from the socket |
| Vertical Compression | 25 | 1 minute | No separation of ball from the socket |
| Longitudinal Tension | 60 | 1 minute | No separation of ball from the socket |
| Longitudinal Compression | 60 | 1 minute | No separation of ball from the socket |
| Transverse Thrust | 18 | 1 minute | No separation of ball from the socket |

The apparatus of the present invention was therefore shown to be safe for use with the specified loads.

It will be appreciated by those skilled in the art that the apparatus 1 may take different forms without departing from the scope of the present invention. For example, the shape and configuration of the first and second abutting portions may be varied to accommodate engaging with tow-ball of different dimensions or different configurations (such as a ring configuration).

The entire disclosures of all applications, patents and publications cited above and below, if any, are herein incorporated by reference.

Reference to any prior art in this specification is not, and should not be taken as, an acknowledgement or any form of suggestion that that prior art forms part of the common general knowledge in the field of endeavour in any country in the world.

The invention may also be said broadly to consist in the parts, elements and features referred to or indicated in the specification of the application, individually or collectively, in any or all combinations of two or more of said parts, elements or features.

Where in the foregoing description reference has been made to integers or components having known equivalents thereof, those integers are herein incorporated as if individually set forth.

It should be noted that various changes and modifications to the presently preferred embodiments described herein will be apparent to those skilled in the art. Such changes and modifications may be made without departing from the scope of the invention as defined in the appended claims and without diminishing its attendant advantages. It is therefore intended that such changes and modifications be included within the present invention.

Unless the context clearly requires otherwise, throughout the description and the claims, the words "comprise", "comprising", and the like, are to be construed in an inclusive sense as opposed to an exclusive or exhaustive sense, that is to say, in the sense of "including, but not limited to".

Aspects of the present invention have been described by way of example only and it should be appreciated that modifications and additions may be made thereto without departing from the scope thereof as defined in the appended claims.

## Claims

1. An apparatus (1, 10, 18) for coupling a trailer to a towing vehicle, the apparatus comprising:
• a support member (3, 11, 19) configured to abut a posterior portion of a tow-ball (2) of the towing vehicle at a first abutting portion (3B, 11b, 23) positioned at an end of the support member;
• a pivot arm (4, 12, 20) configured to pivot over the tow-ball to a position where a second abutting portion (4A, 12c) positioned on an end of the pivot arm is adjacent an anterior portion of the tow-ball;
• a pivot plate (5, 13, 21) connected to the pivot arm (4, 12, 20) at a first pivot (6,12a) and to the support member (3, 11, 19) at a second pivot (7, 13a)
wherein
the pivot plate (5, 13, 21) is configured to bias the first abutting portion (3B, 11b, 23) towards the second abutting portion (4A, 12c) to securely contact the posterior portion and the anterior portion of the tow-ball respectively.

2. An apparatus for coupling a trailer to a towing vehicle as claimed in claim 1 wherein the first abutting portion (3B, 11b, 23) and the second abutting portion (4A, 12c) have a curved inner surface (3C, 4B) configured to provide maximum contact with an outer surface of the tow-ball.

3. An apparatus for coupling a trailer to a towing vehicle as claimed in claim 1 or claim 2 wherein the first abutting portion and/or the second abutting portion comprise at least one friction pad (16, 17) positioned on the curved inner surface (3C, 4B) of the first abutting portion (3B, 11b, 23) and/or the second abutting portion (4A, 12C) to prevent damage to the tow-ball during use.

4. An apparatus for coupling a trailer to a towing vehicle as claimed in any one of claims 1 to 3 wherein the lever comprises a handle (8, 14) to aid the user moving the lever.

5. An apparatus for coupling a trailer to a towing vehicle as claimed in any one of claims 1 to 4 wherein the support member (3, 11) also comprises a pair of guiding plates (9, 11c), each guiding plate attached proximal to the first abutting portion (3B, 11b) of the support member and configured to deflect the support member when in proximity with the tow-ball to a position where the first abutting portion abuts the tow-ball.

6. An apparatus for coupling a trailer to a towing vehicle as claimed in any one of claims 1 to 5 wherein the position of the first pivot (7) may be moved by attaching the pivot arm to the support member (3) at one of a series of apertures (3D) along a length of the support member via a fixing means.

7. An apparatus for coupling a trailer to a towing vehicle as claimed in any one of claims 1 to 6 wherein the apparatus for coupling a trailer to a towing vehicle also comprises a catch (15) pivotally attached to the pivot plate (13) and configured to attach to the support member (11) to prevent movement of the pivot plate with respect to the support member.

8. An apparatus for coupling a trailer to a towing vehicle as claimed in claim 7 wherein the catch comprises a tension spring (15a) configured to bias the catch to release from the support member.

9. An apparatus for coupling a trailer to a towing vehicle as claimed in any one of claims 1 to 7 wherein, the apparatus for coupling a trailer to a towing vehicle also comprises a locking pin to secure the pivot plate (5, 13, 21) to the support arm (3, 11, 19).

10. An apparatus for coupling a trailer to a towing vehicle as claimed in any one of claims 1 to 9 wherein the apparatus for coupling a trailer to a towing vehicle also comprises a linear actuator (22) configured to move the apparatus to or from a position where the first abutting portion (23) abuts the posterior portion of the tow-ball.

11. An apparatus for coupling a trailer to a towing vehicle as claimed in claim 10 wherein the linear actuator (22) is driven by an electric motor.

12. A method of coupling a trailer to a trailer hitch, the method comprising the steps of:
a. positioning a support member (3, 11, 19) to abut a posterior portion of the tow-ball (2) of a towing vehicle at a first abutting portion (3B, 11b, 23) positioned at an end of the support member;
b. moving a pivot arm (4, 12, 20) to pivot over the tow-ball to a position where a second abutting portion (4A, 12c) positioned on an end of the pivot arm is adjacent an anterior portion of the tow-ball; and
c. moving a pivot plate (5, 13, 21) connected to the pivot arm (4, 12, 20) at a first pivot (6, 12a) and to the support member at a second pivot (7, 13a) to bias the first abutting portion and the second abutting portion towards one another to securely contact the posterior portion and anterior portion of the tow-ball respectively.

## Patentansprüche

1. Vorrichtung (1, 10, 18) zur Kopplung eines Anhängers mit einem Zugfahrzeug, wobei die Vorrichtung folgendes umfasst:
• ein Trägerelement (3, 11, 19), das so gestaltet ist, dass es ein einem hinteren Teil eines Kugelkopfs (2) des Zugfahrzeugs an einem ersten Anstoßteil (3B, 11b, 23) anstößt, positioniert an einem Ende des Trägerelements;
• einen Schwenkarm (4, 12, 20), der so gestaltet ist, dass er über den Kugelkopf an eine Position schwenkt, wobei ein zweiter Anstoßteil (4A, 12c), der an einem Ende des Schwenkarms positioniert ist, sich angrenzend an einen vorderen Teil des Kugelkopfes befindet;
• eine Schwenkplatte (5, 13, 21), die an einem ersten Drehpunkt (6, 12a) mit dem Schwenkarm (4, 12, 20) und an einem zweiten Drehpunkt (7, 13a) mit dem Trägerelement (3, 11, 19) verbunden ist;
wobei
die Schwenkplatte (5, 13, 21) so gestaltet ist, dass sie den ersten Anstoßteil (3B, 11b, 23) in Richtung des zweiten Anstoßteils (4A, 12c) vorbelastet, um einen entsprechend sicheren Kontakt mit dem hinteren Teil und dem vorderen Teil des Kugelkopfes vorzusehen.

2. Vorrichtung zur Kopplung eines Anhängers mit einem Zugfahrzeug nach Anspruch 1, wobei der erste Anstoßteil (3B, 11b, 23) und der zweite Anstoßteil (4A, 12c) eine gekrümmte innere Oberfläche (3C, 4B) aufweisen, die so gestaltet ist, dass ein maximaler Kontakt mit einer äußeren Oberfläche des Kugelkopfes bereitgestellt wird.

3. Vorrichtung zur Kopplung eines Anhängers mit einem Zugfahrzeug nach Anspruch 1 oder 2, wobei der erste Anstoßteil und/oder der zweite Anstoßteil mindestens einen Reibbelag (16, 17) umfasst, der an der gekrümmten inneren Oberfläche (3C, 4B) des ersten Anstoßteils (3B, 11b, 23) und/oder des zweiten Anstoßteils (4A, 12C) positioniert ist, um eine Beschädigung des Kugelkopfes im Einsatz zu verhindern.

4. Vorrichtung zur Kopplung eines Anhängers mit einem Zugfahrzeug nach einem der Ansprüche 1 bis 3, wobei der Hebel einen Handgriff (8, 14) zur Unterstützung des Benutzers bei der Bewegung des Hebels umfasst.

5. Vorrichtung zur Kopplung eines Anhängers mit einem Zugfahrzeug nach einem der Ansprüche 1 bis 4, wobei das Trägerelement (3, 11) ferner ein Paar von Führungsplatten (9, 11c) umfasst, wobei jede Führungsplatte proximal zu dem ersten Anstoßteil (3B, 11b) des Trägerelements angebracht ist und so gestaltet ist, dass das Trägerelement mit dem Kugelkopf, wenn es sich in der Nähe befindet, an eine Position abgelenkt wird, an welcher der erste Anstoßteil an den Kugelkopf anstößt.

6. Vorrichtung zur Kopplung eines Anhängers mit einem Zugfahrzeug nach einem der Ansprüche 1 bis 5, wobei die Position des ersten Drehpunkts (7) durch Anbringen des Schwenkarms an dem Trägerelement (11) an einer Öffnung (3D) einer Reihe von Öffnungen entlang des Trägerelements über ein Befestigungsmittel bewegt werden kann.

7. Vorrichtung zur Kopplung eines Anhängers mit einem Zugfahrzeug nach einem der Ansprüche 1 bis 6, wobei die Vorrichtung zur Kopplung eines Anhängers mit einem Zugfahrzeug ferner eine Klinke (15) umfasst, die schwenkbar an der Schwenkplatte (13) angebracht ist und für eine Anbringung an dem Trägerelement (11) gestaltet ist, um eine Bewegung der Schwenkplatte im Verhältnis zu dem Trägerelement zu verhindern.

8. Vorrichtung zur Kopplung eines Anhängers mit einem Zugfahrzeug nach Anspruch 7, wobei die Klinke eine Spannungsfeder (15a) umfasst, die so gestaltet ist, dass sie die Klinke zur Freigabe von dem Trägerelement vorfedert.

9. Vorrichtung zur Kopplung eines Anhängers mit einem Zugfahrzeug nach einem der Ansprüche 1 bis 7, wobei die Vorrichtung zur Kopplung eines Anhängers mit einem Zugfahrzeug ferner einen Sicherungsstift umfasst, um die Schwenkplatte (5, 13, 21) an dem Trägerarm (3, 11, 19) zu sichern.

10. Vorrichtung zur Kopplung eines Anhängers mit einem Zugfahrzeug nach einem der Ansprüche 1 bis 9, wobei die Vorrichtung zur Kopplung eines Anhängers mit einem Zugfahrzeug ferner einen Linearaktor (22) umfasst, der so gestaltet ist, dass er die Vorrichtung an oder von einer Position bewegt, an welcher der erste Anstoßteil (23) an den hinteren Teil des Kugelkopfes anstößt.

11. Vorrichtung zur Kopplung eines Anhängers mit einem Zugfahrzeug nach Anspruch 10, wobei der Linearaktor (22) durch einen Elektromotor angetrieben wird.

12. Verfahren zur Kopplung eines Anhängers mit einer Anhängerkupplung, wobei das Verfahren die folgenden Schritte umfasst:
a) Positionieren eines Trägerelements (3, 11, 19), so dass es ein einem hinteren Teil des Kugelkopfs (2) eines Zugfahrzeugs an einem ersten Anstoßteil (3B, 11b, 23) anstößt, positioniert an einem Ende des Trägerelements;
b) Bewegen eines Schwenkarms (4, 12, 20), so dass er über den Kugelkopf an eine Position schwenkt, wobei ein zweiter Anstoßteil (4A, 12c), der an einem Ende des Schwenkarms positioniert ist, sich angrenzend an einen vorderen Teil des Kugelkopfes befindet; und
c) Bewegen einer Schwenkplatte (5, 13, 21), die an einem ersten Drehpunkt (6, 12a) mit dem Schwenkarm (4, 12, 20) und an einem zweiten Drehpunkt (7, 13a) mit dem Trägerelement verbunden ist, so dass der erste Anstoßteil und der zweite Anstoßteil zueinander hin vorgefedert werden, um einen entsprechend sicheren Kontakt mit dem hinteren Teil und dem vorderen Teil des Kugelkopfes vorzusehen.

## Revendications

1. Appareil (1, 10, 18) pour le couplage d'une remorque à un véhicule de remorquage, l'appareil comprenant :
un élément de support (3, 11, 19) conçu pour venir en butée contre une partie postérieure d'une boule de remorquage (2) du véhicule de remorquage au niveau d'une première partie de butée (3B, 11b, 23) positionnée à une extrémité de l'élément de support ;
un bras pivotant (4, 12, 20) conçu pour pivoter sur la boule de remorquage jusqu'à une position où une seconde partie de butée (4A, 12c) positionnée sur une extrémité du bras pivotant est adjacente à une partie antérieure de la boule de remorquage ;
une plaque pivotante (5, 13, 21) reliée au bras pivotant (4, 12, 20) au niveau d'un premier pivot (6, 12a) et à l'élément de support (3, 11, 19) au niveau d'un second pivot (7, 13a)
la plaque pivotante (5, 13, 21) étant conçue pour solliciter la première partie de butée (3B, 11b, 23) vers la seconde partie de butée (4A, 12c) pour entrer en contact de manière sécurisée respectivement avec la partie postérieure et la partie antérieure de la boule d'attelage.

2. Appareil pour le couplage d'une remorque à un véhicule de remorquage selon la revendication 1, la première partie de butée (3B, 11b, 23) et la seconde partie de butée (4A, 12c) ayant une surface interne incurvée (3C, 4B) conçue pour fournir un contact maximal avec une surface externe de la boule de remorquage.

3. Appareil pour le couplage d'une remorque à un véhicule de remorquage selon la revendication 1 ou 2, la première partie de butée et/ou la seconde partie de butée comprenant au moins un patin de friction (16, 17) positionné sur la surface interne incurvée (3C, 4B) de la première partie de butée (3B, 11b, 23) et/ou de la seconde partie de butée (4A, 12C) pour éviter d'endommager la boule de remorquage pendant l'utilisation.

4. Appareil pour le couplage d'une remorque à un véhicule de remorquage selon l'une quelconque des revendications 1 à 3, le levier comprenant une poignée (8, 14) pour aider l'utilisateur à déplacer le levier.

5. Appareil pour le couplage d'une remorque à un véhicule de remorquage selon l'une quelconque des revendications 1 à 4, l'élément de support (3, 11) comprenant également une paire de plaques de guidage (9, 11c), chaque plaque de guidage étant fixée à proximité de la première partie de butée (3B, 11b) de l'élément de support et conçue pour dévier l'élément de support lorsqu'il est à proximité de la boule de remorquage vers une position où la première partie de butée est en butée contre la boule de remorquage.

6. Appareil pour le couplage d'une remorque à un véhicule de remorquage selon l'une quelconque des revendications 1 à 5, la position du premier pivot (7) pouvant être déplacée en fixant le bras pivotant à l'élément de support (3) au niveau de l'une d'une série d'ouvertures (3D) le long d'une longueur de l'élément de support par l'intermédiaire d'un moyen de fixation.

7. Appareil pour le couplage d'une remorque à un véhicule de remorquage selon l'une quelconque des revendications 1 à 6, l'appareil pour le couplage d'une remorque à un véhicule de remorquage comprenant également un verrou (15) fixé de manière pivotante à la plaque pivotante (13) et conçu pour être fixé à l'élément de support (11) afin d'empêcher le mouvement de la plaque pivotante par rapport à l'élément de support.

8. Appareil pour le couplage d'une remorque à un véhicule de remorquage selon la revendication 7, le verrou comprenant un ressort de tension (15a) conçu pour solliciter le verrou pour le libérer de l'élément de support.

9. Appareil pour le couplage d'une remorque à un véhicule de remorquage selon l'une quelconque des revendications 1 à 7, l'appareil pour le couplage d'une remorque à un véhicule de remorquage comprenant également une goupille de verrouillage pour fixer la plaque pivotante (5, 13, 21) au bras de support (3, 11, 19).

10. Appareil pour le couplage d'une remorque à un véhicule de remorquage selon l'une quelconque des revendications 1 à 9, l'appareil pour le couplage d'une remorque à un véhicule de remorquage comprenant également un actionneur linéaire (22) conçu pour déplacer l'appareil vers ou depuis une position où la première partie de butée (23) vient en butée contre la partie postérieure de la boule de remorquage.

11. Appareil pour le couplage d'une remorque à un véhicule de remorquage selon la revendication 10, l'actionneur linéaire (22) étant entraîné par un moteur électrique.

12. Procédé de couplage d'une remorque à un attelage de remorque, le procédé comprenant les étapes consistant à :
a. positionner un élément de support (3, 11, 19) pour venir en butée contre une partie postérieure de la boule de remorquage (2) d'un véhicule de remorquage au niveau d'une première partie de butée (3B, 11b, 23) positionnée à une extrémité de l'élément de support ;
b. déplacer un bras pivotant (4, 12, 20) pour pivoter sur la boule de remorquage jusqu'à une position où une seconde partie de butée (4A, 12c) positionnée sur une extrémité du bras pivotant est adjacente à une partie antérieure de la boule de remorquage ; et
c. déplacer une plaque pivotante (5, 13, 21) reliée au bras pivotant (4, 12, 20) au niveau d'un premier pivot (6, 12a) et à l'élément de support au niveau d'un second pivot (7, 13a) pour solliciter la première partie de butée et la seconde partie de butée l'une vers l'autre pour entrer en contact de manière sûre respectivement avec la partie postérieure et la partie antérieure de la boule de remorquage.
